# EUROPÄISCHE PATENTSCHRIFT

(11) **EP 1 368 942 B1**
(45) Veröffentlichungstag und Bekanntmachung des Hinweises auf die Patenterteilung: **24.05.2006**
(21) Anmeldenummer: 02727208.7
(22) Anmeldetag: 11.03.2002
(51) Int. Cl.: H04L 12/64

(54) **VERFAHREN UND SYSTEM ZUR KOPPLUNG VON DATENNETZEN**
METHOD AND SYSTEM FOR COUPLING DATA NETWORKS
PROCEDE ET SYSTEME POUR COUPLER DES RESEAUX DE DONNEES

(30) Priorität: 16.03.2001 DE 10113263; 21.08.2001 DE 10140861
(43) Veröffentlichungstag der Anmeldung: 10.12.2003
(73) Patentinhaber: SIEMENS AKTIENGESELLSCHAFT, 80333 München (DE)
(72) Erfinder: BRÜCKNER, Dieter, 96199 Zapfendorf (DE); FRANKE, Michael, 91056 Erlangen (DE); GÖTZ, Franz-Josef, 91180 Heideck (DE); KIESEL, Martin, 91099 Poxdorf (DE); KLOTZ, Dieter, 90768 Fürth (DE); SCHIMMER, Jürgen, 90473 Nürnberg (DE)
(86) Internationale Anmeldenummer: PCT/DE2002/000859
(87) Internationale Veröffentlichungsnummer: WO 2002/076034

(56) Entgegenhaltungen:
- US-A- 5 594 734
- US-A- 5 654 969

## Beschreibung

Die Erfindung betrifft ein System und ein Verfahren zur Übertragung von Daten zwischen Datennetzwerken.

Datennetze ermöglichen die Kommunikation zwischen mehreren Teilnehmern durch die Vernetzung, also Verbindung der einzelnen Teilnehmer untereinander. Kommunikation bedeutet dabei die Übertragung von Daten zwischen den Teilnehmern. Die zu übertragenden Daten werden dabei als Datentelegramme verschickt, d.h. die Daten werden zu mehreren Paketen zusammengepackt und in dieser Form über das Datennetz an den entsprechenden Empfänger gesendet. Man spricht deshalb auch von Datenpaketen.

Der Begriff Übertragung von Daten wird hier synonym zur oben erwähnten Übertragung von Datentelegrammen oder Datenpaketen verwendet. Die Vernetzung selbst wird beispielsweise bei schaltbaren Hochleistungsdatennetzen, insbesondere Ethernet, dadurch gelöst, dass zwischen zwei Teilnehmern jeweils mindestens eine Koppeleinheit geschaltet ist, die mit beiden Teilnehmern verbunden ist. Jede Koppeleinheit kann mit mehr als zwei Teilnehmern verbunden sein.

Jeder Teilnehmer ist mit mindestens einer Koppeleinheit, aber nicht direkt mit einem anderen Teilnehmer verbunden. Teilnehmer sind beispielsweise Computer, speicherprogrammierbare Steuerungen (SPS) oder andere Maschinen, die elektronische Daten mit anderen Maschinen austauschen, insbesondere verarbeiten. Im Gegensatz zu Bussystemen, bei denen jeder Teilnehmer jeden anderen Teilnehmer des Datennetzes direkt über den Datenbus erreichen kann, handelt es sich bei den schaltbaren Datennetzen ausschließlich um Punkt-zu-Punkt-Verbindungen, d.h. ein Teilnehmer kann alle anderen Teilnehmer des schaltbaren Datennetzes nur indirekt, durch entsprechende Weiterleitung der zu übertragenden Daten mittels einer oder mehrerer Koppeleinheiten erreichen.

In verteilten Automatisierungssystemen, beispielsweise im Bereich Antriebstechnik, müssen bestimmte Daten zu bestimmten Zeiten bei den dafür bestimmten Teilnehmern eintreffen und von den Empfängern verarbeitet werden. Man spricht dabei von echtzeitkritischen Daten bzw. Datenverkehr, da ein nicht rechtzeitiges Eintreffen der Daten am Bestimmungsort zu unerwünschten Resultaten beim Teilnehmer führt. Gemäss IEC 61491, EN61491 SERCOS interface - Technische Kurzbeschreibung (http://www.sercos.de/deutsch/index_deutsch.htm) kann ein erfolgreicher echtzeitkritischer Datenverkehr der genannten Art in verteilten Automatisierungssystemen gewährleistet werden.

Aus dem Stand der Technik sind verschiedene standardisierte Kommunikationssysteme, auch Bussysteme genannt, zum Datenaustausch zwischen zwei oder mehreren elektronischen Baugruppen bzw. Geräten bekannt, insbesondere auch für den Einsatz in Automatisierungssystemen. Beispiele für solche Kommunikationssysteme sind: Feldbus, Profibus, Ethernet, Industrial Ethernet, FireWire oder auch PC-interne Bussysteme (PCI). Diese Bussysteme sind jeweils für unterschiedliche Anwendungsfelder konzipiert bzw. optimiert und erlauben den Aufbau eines dezentralen Steuerungssystems. Für die Prozesssteuerung und - Überwachung in der automatisierten Fertigung und insbesondere bei digitalen Antriebstechniken sind sehr schnelle und zuverlässige Kommunikationssysteme mit vorhersagbaren Reaktionszeiten erforderlich.

Mit parallelen Bussystemen, wie beispielsweise SMP, ISA, PCI oder VME, ist eine sehr schnelle und einfache Kommunikation zwischen verschiedenen Baugruppen aufbaubar. Diese bekannten Bussysteme finden ihren Einsatz dabei insbesondere in Rechnern und PCs.

Insbesondere aus der Automatisierungstechnik sind synchrone, getaktete Kommunikationssysteme mit Äquidistanz-Eigenschaften bekannt. Hierunter versteht man ein System aus wenigsten zwei Teilnehmern, die über ein Datennetz zum Zweck des gegenseitigen Austauschs von Daten bzw. der gegenseitigen Übertragung von Daten miteinander verbunden sind. Dabei erfolgt der Datenaustausch zyklisch in äquidistanten Kommunikationszyklen, die durch den vom System verwendeten Kommunikationstakt vorgegeben werden. Teilnehmer sind beispielsweise zentrale Automatisierungsgeräte, Programmier-, Projektierungs- oder Bediengeräte, Peripheriegeräte wie z.B. Ein- / Ausgabe-Baugruppen, Antriebe, Aktoren, Sensoren, speicherprogrammierbare Steuerungen (SPS) oder andere Kontrolleinheiten, Computer, oder Maschinen, die elektronische Daten mit anderen Maschinen austauschen, insbesondere Daten von anderen Maschinen verarbeiten. Unter Kontrolleinheiten werden im folgenden Regler- oder Steuerungseinheiten jeglicher Art verstanden.

Ein äquidistanter deterministischer zyklischer Datenaustausch in Kommunikationssystemen basiert auf einer gemeinsamen Takt- bzw. Zeitbasis aller an der Kommunikation beteiligten Komponenten. Die Takt- bzw. Zeitbasis wird von einer ausgezeichneten Komponente (Taktschläger) zu den anderen Komponenten übertragen. Bei isochronen Realtime-Ethernet wird der Takt bzw. die Zeitbasis von einem Synchronisationsmaster durch das Senden von Synchronisationstelegrammen vorgegeben.

In der noch nicht veröffentlichten deutschen Patentanmeldung 100 58 524.8 ist ein System und ein Verfahren zur Übertragung von Daten über schaltbare Datennetze, insbesondere das Ethernet offenbart, das einen Mischbetrieb von echtzeitkritischer und nichtechtzeitkritischer, insbesondere Inter- bzw. Intranet basierter Datenkommunikation erlaubt.

US 5,594,734 offenbart ein Kommunikationssystem, mit dem isochrone und nicht-isochrone Daten übertragen werden können. Die Datenübertragung erfolgt mit Zeitmultiplexing mit einer periodischen Rahmenstruktur. Die Daten werden anschließend demultiplext und von einem Hub zu den Endgeräten transferiert.

Der Erfindung liegt die Aufgabe zu Grunde ein verbessertes System und Verfahren zur Übertragung von Daten zwischen Datennetzen zu schaffen.

Die Erfindung erlaubt die Kopplung unterschiedlicher Datennetze über eine Koppeleinheit, z. B. einen so genannten Router, wobei die einzelnen Datennetze jeweils Daten in Übertragungszyklen übertragen und die Übertragungszyklen in Bereiche für die Übertragung von echtzeitkritischen Daten und nichtechtzeitkritischen Daten aufgeteilt sind.

Auf diese Art und Weise können Datennetze mit denselben oder unterschiedlichen Kommunikationsprotokollen miteinander gekoppelt werden, z. B. Ethernet-Datennetze, insbesondere isochrone Echtzeitethernet-Kommunikationssysteme, mit PROFIBUS-Datennetzen oder isochrone Echtzeitethernet-Datennetze mit SERCOS-Datennetzen und / oder FIREWIRE-Datennetzen oder PROFIBUS-Datennetze und / oder FIREWIRE-Datennetze mit SERCOS-Datennetzen.

Die Übertragung von Daten von dem einen in das andere Datennetz kann sich dabei sowohl auf echtzeitkritische als auch auf nichtechtzeitkritische Daten beziehen. Die Möglichkeit echtzeitkritische Daten von einem Datennetz in das andere übertragen zu können, wird in einer bevorzugten Ausführungsform der Erfindung dazu benutzt, Zyklus-Synchronisationstelegramme von einen Taktschläger des einen Datennetzes in das andere Datennetz zu übertragen, um auch in dem anderen Datennetz lokale Relativuhren mit Hilfe der Zyklus-Synchronisationstelegrammen zu synchronisieren.

In einer weiteren bevorzugten Ausführungsform der Erfindung haben die unterschiedlichen Datennetze jeweils eigene Taktschläger.

In einer weiteren bevorzugten Ausführungsform der Erfindung werden auch nichtechtzeitkritische Daten beispielsweise für die azyklische, bedarfsgesteuerte Kommunikation von dem einen in das andere Datennetz durch die Zuordnung unterschiedlicher Bereiche in den entsprechenden Übertragungszyklen übertragen. Des Weiteren können auf diese Art und Weise auch Softwareaufrufe, insbesondere so genannte Remote Procedure Calls (RPC) von dem einen in das andere Netz geroutet werden. Dadurch können Serverfunktionalitäten in dem entfernten Datennetz genutzt werden.

Im Folgenden wird die Erfindung anhand der in den Figuren dargestellten Ausführungsbeispiele näher beschrieben und erläutert. Es zeigen:
- Fig. 1: ein schematisches Blockdiagramm einer Ausführungsform eines erfindungsgemäßen Systems zur Übertragung Daten,
- Fig. 2: ein Flussdiagramm eines entsprechenden Verfahrens.

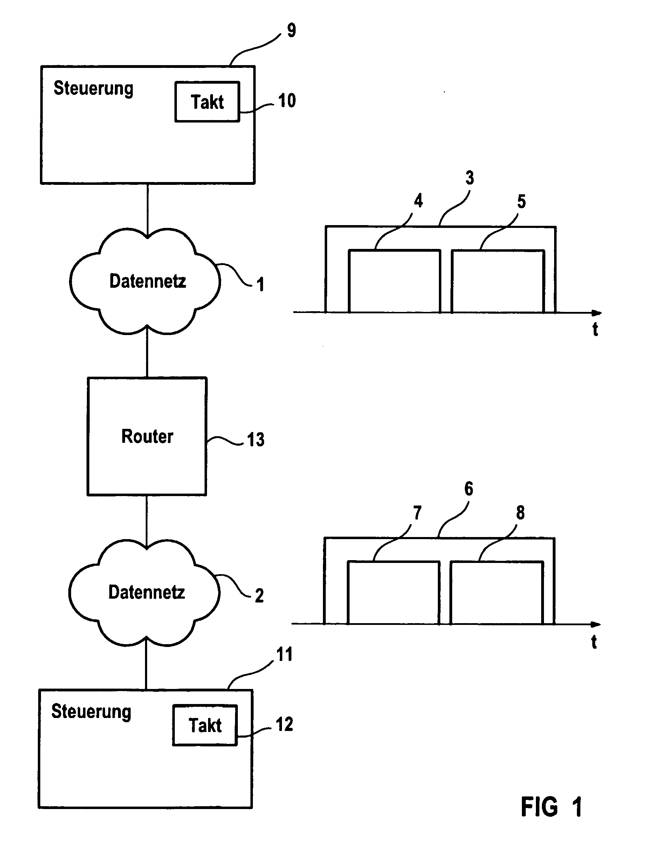

Die Fig. 1 zeigt ein System, welches die Datennetze 1 und 2 beinhaltet.

Bei dem Datennetz 1 kann es sich beispielsweise um ein isochrones Echtzeitethernet und bei dem Datennetz 2 um ein PROFIBUS-Netz oder um ein isochrones Echtzeitethernet oder um Kombinationen aus SERCOS-, FIREWIRE- und/oder PROFIBUS-Datennetzen handeln. Grundsätzlich können beliebige Datennetze verwendet werden, die sowohl die Übertragung von echtzeitkritischen als auch nichtechtzeitkritischen Daten erlauben.

Für die Datenübertragung in dem Datennetz 1 sind Übertragungsrahmen 3 vorgesehen. Solche Übertragungsrahmen 3 folgen in bestimmten Zeitabständen zyklisch aufeinander. Innerhalb eines Übertragungsrahmens 3 ist ein Bereich 4 für die Übertragung von echtzeitkritischen Daten definiert. Darüber hinaus ist ein Bereich 5 für die Übertragung von nichtechtzeitkritischen Daten in dem Übertragungsrahmen 3 definiert, und zwar jeweils für die Übertragung solcher Daten zwischen Teilnehmern des Datennetzes 1.

Bei den echtzeitkritischen Daten kann es sich um verschiedene Datentelegramme handeln, die zu definierten Zeiten zwischen definierten Teilnehmern des Datennetzes 1 mit jeweils festgelegten Adressen übertragen werden. Die durch diese definierten Datentelegramme bestimmte Kommunikationsstruktur zwischen den Teilnehmern des Datennetzes 1 ist dabei im Allgemeinen fest; es ändern sich lediglich die von den einzelnen Datentelegrammen jeweils übertragenen Nutzdaten.

Dagegen kann es sich bei den nichtechtzeitkritischen Daten, die in dem Bereich 5 des Übertragungsrahmens 3 übertragen werden können, um azyklische Daten einer bedarfsgesteuerten Kommunikation handeln. Bei der bedarfsgesteuerten Kommunikation kann beispielsweise ein TCP/IP Protokoll zur Anwendung kommen.

Entsprechend verhält es sich für das Datennetz 2. Dieses hat Übertragungsrahmen 6, die den Übertragungsrahmen 3 des Datennetzes 1 entsprechen. Ein Übertragungsrahmen 6 ist dabei in einem Bereich 7 für echtzeitkritische Daten und einen Bereich 8 für nichtechtzeitkritische Daten unterteilt - entsprechend den Bereichen 4 und 5 des Übertragungsrahmens 3.

Das Datennetz 1 hat beispielsweise eine Steuerung 9, die einen Taktschläger 10 beinhaltet. Der Taktschläger 10 sendet Zyklus-Synchronisationstelegramme an die Teilnehmer des Datennetzes 1 für die Synchronisation der jeweils in den Teilnehmern vorhandenen lokalen Relativuhren.

Eine entsprechende Steuerung 11 mit einem Taktschläger 12 ist auch für das Datennetz 2 in dem betrachteten Beispiel vorhanden.

Die Datennetze 1 und 2 sind mit einer Koppeleinheit, das heißt, einem so genannten Router 13 miteinander verbunden.

Beispielsweise kann ein Teilnehmer des Datennetzes 1 einen anderen Teilnehmer des Datennetzes 2 mit dessen so genannter IP Adresse adressieren, wobei in dem Router 13 eine Umsetzung der IP Adresse in eine Adresse des Datennetzes 2, z. B. eine Ethernetadresse, erfolgt.

Wenn ein Teilnehmer des Datennetzes 1 an einen anderen Teilnehmer des Datennetzes 2 ein Datentelegramm mit echtzeitkritischen Daten sendet, so werden diese Daten in dem Bereich 4 des Übertragungsrahmens 3 über das Datennetz 1 zu dem Router 13 übertragen. Der Router 13 identifiziert dann den zeitlich nächsten Beginn eines Übertragungsrahmens 6 des Datennetzes 2, um die echtzeitkritischen Daten von dem Teilnehmer des Datennetzes 1 dem Bereich 7 des Übertragungsrahmens 6 zuzuordnen, so dass diese echtzeitkritischen Daten mittels eines entsprechenden Datentelegramms über das Datennetz 2 zu dem adressierten Teilnehmer des Datennetzes 2 weitergeleitet werden.

Entsprechend ist auch die Übertragung von nichtechtzeitkritischen Daten von einem Teilnehmer des Datennetzes 1 zu einem Teilnehmer des Datennetzes 2 möglich. Dazu wird von dem Teilnehmer des Datennetzes 1 ein Datentelegramm mit nichtechtzeitkritischen Daten über das Datennetz 1 zu dem Router 13 übertragen. Dazu werden diese nichtechtzeitkritischen Daten dem Bereich 5 des Übertragungsrahmens 3 zugeordnet. Der Router 13 identifiziert dann wiederum den zeitlich nächsten Übertragungsrahmen des Datennetzes 2, um die nichtechtzeitkritischen Daten dem Bereich 8 zuzuordnen, so dass ein entsprechendes Datentelegramm an den gewünschten Teilnehmer des Datennetzes 2 übertragen wird.

Die zeitliche Länge der Übertragungsrahmen 3 und 6 kann unterschiedlich sein und kann auch variieren. Beispielsweise kann die zeitliche Länge der Übertragungsrahmen unterschiedlichen periodischen Veränderungen unterworfen sein. Beispielsweise können die Längen der Übertragungsrahmen 3 periodisch die Zeitdauern 2 ms, 3 ms und 4 ms annehmen, während die Zeitdauer der Übertragungsrahmen 6 periodisch die Zeitdauern 1m, 2 ms und 3 ms annehmen kann. Die Übertragungsrahmen 3 und 6 können jedoch auch die gleiche feste Zeitdauer und / oder die gleiche Periodizität aufweisen.

Über den Router 13 können auch die Zyklus-Synchronisationstelegramme des Taktschlägers 10 an die Teilnehmer des Datennetzes 2 übertragen werden. Hierbei kann der oben mit Bezug auf die Übertragung von echtzeitkritischen und nichtechtzeitkritischen Daten geschilderte Mechanismus verwendet werden. In diesem Fall ist der Taktschläger 12 ausgeschaltet oder nicht vorhanden. Basierend auf dieser Taktsynchronisation der Teilnehmer der Datennetze 1 und 2 können die Kommunikationsteilnehmer in beiden Datennetzen, z. B. Synchron-Ist-Werte erfassen bzw. Synchron-Soll-Werte ausgeben. Besonders vorteilhaft können auf diese Art und Weise z. B. ein isochrones Echtzeitethernet mit einem PROFIBUS oder SERCOS Datennetz gekoppelt werden.

Aufgrund dieser datennetzübergreifenden Taktsynchronisation kann in jedem der Teilnehmer der Datennetze 1 und 2 eine Relativuhr realisiert werden, die eine systemweit eindeutige Uhrzeit darstellt. Basierend auf diesem Grundmechanismus können hiermit Ereignisse in beiden Kommunikationssystemen mit einem einheitlichen Zeitverständnis erfasst werden bzw. zeitbezogene Schaltereignisse im eigenen oder dem anderen Datennetz ausgelöst werden. Die Genauigkeit der Relativuhr entspricht mindestens der Genauigkeit eines Übertragungszyklus.

Ein weiterer besonderer Vorteil des Systems der Fig. 1 ist, dass auch das Routing von azyklischer bedarfsgesteuerter Kommunikation zwischen den Datennetzen 1 und 2 möglich ist. Die entsprechende Kommunikation kann dabei mit proprietären und / oder offenen Protokollen erfolgen.

Ebenso können zwischen Teilnehmern des Datennetzes 1 und 2 Softwareaufrufe, insbesondere so genannte Remote Procedure Calls (RPC), über den Router 13 übertragen werden. Auf diese Weise kann eine Serverfunktionalität in dem jeweils anderen Datennetz genutzt werden.

Der Router 13 kann dabei als diskretes Gerät ausgebildet sein oder er kann auch integraler Bestandteil eines Teilnehmers eines der Datennetze 1 oder 2 sein.

Das System der Fig. 1 kann vorteilhafterweise für die Überwachung, Regelung und / oder Steuerung bei und in Verpackungsmaschinen, Pressen, Kunststoffspritzmaschinen, Textilmaschinen, Druckmaschinen, Werkzeugmaschinen, Robotor, Handlingssystemen, Holzverarbeitungsmaschinen, Glasverarbeitungsmaschinen, Keramikverarbeitungsmaschinen sowie Hebezeugen verwendet werden kann.

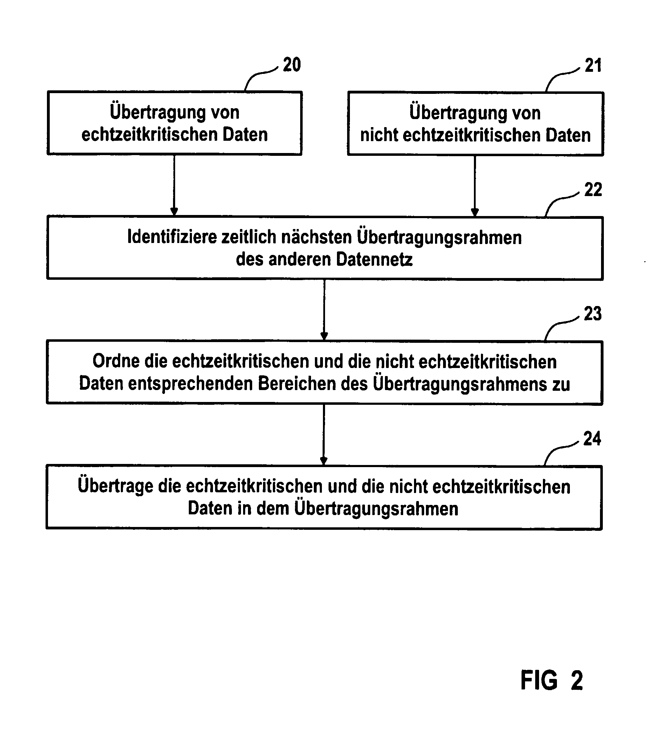

Die Fig. 2 zeigt ein entsprechendes Flussdiagramm. In dem Schritt 20 erfolgt die Übertragung von echtzeitkritischen Daten durch einen Teilnehmer, beispielsweise des Datennetzes 1 (vgl. Fig. 1) in einem Datentelegramm, welches an einen Teilnehmer des anderen Datennetzes (vgl. Datennetz 2 der Fig. 1) gerichtet ist. Die echtzeitkritischen Daten werden dabei in dem entsprechenden Bereich des Übertragungszyklus des Datennetzwerks übertragen.

In dem Schritt 21 erfolgt die Übertragung von nichtechtzeitkritischen Daten desselben oder eines anderen Teilnehmers des Datennetzes in dem entsprechenden anderen Bereich des Übertragungszyklus.

In dem Schritt 22 wird das oder die Datentelegramme der Teilnehmer des Datennetzes von der Koppeleinheit, das heißt, von dem Router, empfangen und der Router identifiziert den zeitlich nächsten Übertragungsrahmen in dem Zieldatennetz.

In dem Schritt 23 ordnet der Router die echtzeitkritischen und die nichtechtzeitkritischen Daten den entsprechenden Bereichen des Übertragungsrahmens des Zieldatennetzes zu. In dem Schritt 24 wird innerhalb eines entsprechenden Übertragungszeitraumes ein oder mehrere Datentelegramme mit den echtzeitkritischen und den nichtechtzeitkritischen Daten in den entsprechenden Bereich des Übertragungsrahmens von dem Router an die betreffenden Teilnehmer des Zieldatennetzes abgesendet.

## Patentansprüche

1. System zur Übertragung von Datentelegrammen mit einem ersten Datennetz (1) mit ersten Mitteln zur Übertragung von Datentelegrammen in wenigstens einen ersten Übertragungszyklus, wobei der erste'Übertragungszyklus in einen ersten Bereich (4) zur Übertragung von echtzeitkritischen Daten und einen zweiten Bereich (5) zur Übertragung von nichtechtzeitkritischen Daten unterteilt ist, und mit einem zweiten Datennetz (2) mit zweiten Mitteln zur Übertragung von Datentelegrammen in wenigstens einen zweiten Übertragungszyklus, wobei der zweite Übertragungszyklus in einen dritten Bereich (7) zur Übertragung von echtzeitkritischen Daten und in einen vierten Bereich (8) zur Übertragung von nichtechtzeitkritischen Daten unterteilt ist, und mit einer Koppeleinheit (13) zur Übertragung von echtzeitkritischen Daten des ersten Bereichs in den dritten Bereich.

2. System nach Anspruch 1, bei dem es sich bei dem ersten und / oder dem zweiten Datennetz um eine Ethernet, ein isochrones Echtzeitethernet, ein PROFIBUS-Datennetz, ein SERCOS-Datennetz oder ein FIREWIRE-Datennetz handelt, das insbesondere für die Vernetzung und / oder Steuerung industrieller Anlagen verwendet wird.

3. System nach Anspruch 1 oder 2, bei dem die ersten und / oder zweiten Übertragungszyklen eine einstellbare und / oder variable Zeitdauer aufweisen und die jeweilige Zeitdauer vorzugsweise periodisch variiert.

4. System nach Anspruch 1, 2 oder 3, bei dem die Koppeleinheit einen zeitlich auf einen ersten Übertragungszyklus folgenden zweiten Übertragungszyklus identifiziert und die echtzeitkritischen Daten des ersten Bereichs des ersten Übertragungszyklus zu dem dritten Bereich des zweiten Übertragungszyklus zuordnet.

5. System nach einem der vorhergehenden Ansprüche 1 bis 4, bei dem die Koppeleinheit zur Übertragung von nichtechtzeitkritischen Daten des zweiten Bereichs in den vierten Bereich ausgebildet ist.

6. System nach einem der vorhergehenden Ansprüche 1 bis 5, bei dem die Koppeleinheit einen zeitlich auf den ersten Übertragungszyklus folgenden zweiten Übertragungszyklus identifiziert und die nichtechtzeitkritischen Daten des zweiten Bereichs in den vierten Bereich überträgt.

7. System nach einem der vorhergehenden Ansprüche 1 bis 6 mit einem ersten Taktschläger (10) des ersten Datennetzes zur Versendung von Zyklus-Synchronisationstelegrammen für die Synchronisation lokaler Relativuhren von Teilnehmern des ersten Datennetzes, wobei die Koppeleinheit zur Übertragung der echtzeitkritischen Zyklus-Synchronisationstelegramme von dem ersten Bereich des einen übertragungszyklus in den dritten Bereichs des zweiten Übertragungszyklus ausgebildet ist.

8. System nach einem der vorhergehenden Ansprüche 1 bis 7 mit einem zweiten Taktschläger (12) für das zweite Datennetz für die Sendung von Zyklus-Synchronisationstelegrammen für die Synchronisation lokaler Relativuhren der Teilnehmer des zweiten Datennetzes.

9. System nach einem der vorhergehenden Ansprüche 1 bis 8, bei dem die Koppeleinheit zur Übertragung von Softwareaufrufen, insbesondere Remote Procedure Calls, ausgebildet ist.

10. Verfahren zur Übertragung von Datentelegrammen von einem ersten Teilnehmer eines ersten Datennetzes mit ersten Mitteln zur Übertragung von Datentelegrammen in wenigstens einen ersten Übertragungszyklus, wobei der erste Übertragungszyklus in einen ersten Bereich zur Übertragung von echtzeitkritischen Daten und einen zweiten Bereich zur Übertragung von nichtechtzeitkritischen Daten unterteilt ist, an einen zweiten Teilnehmer eines zweiten Datennetzes mit zweiten Mitteln zur Übertragung von Datentelegrammen in wenigstens einem zweiten Übertragungszyklus, wobei der zweite Übertragungszyklus in einen dritten Bereich zur Übertragung von echtzeitkritischen Daten und in einen vierten Bereich zur Übertragung von nichtechtzeitkritischen Daten unterteilt ist, bei dem echtzeitkritische Daten des ersten Bereichs des ersten Übertragungszyklus in den dritten Bereich eines auf den ersten Übertragungszyklus folgenden zweiten Übertragungszyklus zu dem zweiten Teilnehmer übertragen werden.

11. Verfahren nach Anspruch 10, bei dem als erstes und / oder als zweites Datennetz ein Ethernet, ein isochrones Echtzeitethernet, ein PROFIBUS-Datennetz, ein SERCOS-Datennetz oder ein FIREWIRE-Datennetz verwendet werden.

12. Verfahren nach Anspruch 10 oder 11, bei dem die ersten und / oder zweiten Übertragungszyklen variieren, vorzugsweise periodisch variieren.

13. Verfahren nach Anspruch 10, 11 oder 12, bei dem der zeitlich nächste auf den ersten Übertragungszyklus folgende zweite Übertragungszyklus für die Datenübertragung ermittelt wird.

14. Verfahren nach einem der vorhergehenden Ansprüche 10 bis 13, bei dem nichtechtzeitkritische Daten des zweiten Bereichs in den vierten Bereich übertragen werden.

15. Verfahren nach einem der vorhergehenden Ansprüche 10 bis 14, bei dem ein Zyklus-Synchronisationstelegramm von einem Taktschläger für die Synchronisation lokaler Relativuhren von ersten Teilnehmern des ersten Datennetzes versendet werden und die Zyklus-Synchronisationstelegramme als echtzeitkritische Daten des ersten Bereichs des ersten Übertragungszyklus in den dritten Bereich des zweiten ten Übertragungszyklus in das zweite Netz für die Synchronisation lokaler Relativuhren von zweiten Teilnehmern des zweiten Datennetzes übertragen werden.

16. Verfahren nach einem der vorhergehenden Ansprüche 10 bis 15, bei dem die Synchronisation lokaler Relativuhren von zweiten Teilnehmern des zweiten Datennetzes über Zyklus-Synchronisationstelegramme eines zweiten Taktschlägers des zweiten Datennetzes erfolgt.

17. Verfahren nach einem der vorhergehenden Ansprüche 10 bis 16, bei dem Softwareaufrufe von ersten Teilnehmern als nichtechtzeitkritische Daten von dem zweiten Bereich des ersten Übertragungszyklus in den vierten Bereich des zweiten Übertragungszyklus an zweite Teilnehmer des zweiten Datennetzes übertragen werden.

18. Computerprogrammprodukt mit Mitteln zur Ausführung eines Verfahrens nach einem der vorhergehenden Ansprüche 10 bis 17, wenn das Computerprogramm auf einem System zur Übertragung von Datentelegrammen ausgeführt wird.

## Claims

1. System for transmitting data messages by means of a first data network (1) having first means for transmitting data messages in at least one first transmission cycle, the first transmission cycle being subdivided into a first area (4) for transmitting real-time-critical data and a second area (5) for transmitting non-real-time-critical data, and by means of a second data network (2) having second means for transmitting data messages in at least one second transmission cycle, the second transmission cycle being subdivided into a third area (7) for transmitting real-time-critical data and into a fourth area (8) for transmitting non-real-time-critical data, and with a switching unit (13) for transmitting real-time-critical data of the first area into the third area.

2. System according to Claim 1, in which the first and/or the second data network is an Ethernet, an isochronous real-time Ethernet, a PROFIBUS data network, a SERCOS data network or a FIREWIRE data network which, in particular, is used for networking and/or controlling industrial plants.

3. System according to Claim 1 or 2, in which the first and/or second transmission cycles have an adjustable and/or variable period and the respective period varies preferably periodically.

4. System according to Claim 1, 2 or 3, in which the switching unit identifies a second transmission cycle following a first transmission cycle in time and allocates the real-time-critical data of the first area of the first transmission cycle to the third area of the second transmission cycle.

5. System according to one of the preceding Claims 1 to 4, in which the switching unit is constructed for transmitting non-real-time-critical data of the second area into the fourth area.

6. System according to one of the preceding Claims 1 to 5, in which the switching unit identifies a second transmission cycle following the first transmission cycle in time and transfers the non-real-time-critical data of the second area into the fourth area.

7. System according to one of the preceding Claims 1 to 6 having a first master clock (10) of the first data network for sending out cycle synchronization messages for synchronizing local relative clocks of users of the first data network, the switching unit being constructed for transmitting the real-time-critical cycle synchronization messages from the first area of the one transmission cycle into the third area of the second transmission cycle.

8. System according to one of the preceding Claims 1 to 7 having a second master clock (12) for the second data network for transmitting cycle synchronization messages for synchronizing local relative clocks of the users of the second data network.

9. System according to one of the preceding Claims 1 to 8, in which the switching unit is constructed for transmitting software calls, particularly remote procedure calls.

10. Method for transmitting data messages of a first user of a first data network having first means for transmitting data messages in at least one first transmission cycle, the first transmission cycle being subdivided into a first area for transmitting real-time-critical data and a second area for transmitting non-real-time-critical data, to a second user of a second data network having second means for transmitting data messages in at least one second transmission cycle, the second transmission cycle being subdivided into a third area for transmitting real-time-critical data and into a fourth area for transmitting non-real-time-critical data, in which real-time-critical data of the first area of the first transmission cycle are transmitted to the second user in the third area of a second transmission cycle following the first transmission cycle.

11. Method according to Claim 10, in which an Ethernet, an isochronous real-time Ethernet, a PROFIBUS data network, a SERCOS data network or a FIREWIRE data network are used as first and/or as second data network.

12. Method according to Claim 10 or 11, in which the first and/or second transmission cycles vary, preferably periodically.

13. Method according to Claim 10, 11 or 12, in which the next, second transmission cycle in time, which follows the first transmission cycle, is determined for the data transmission.

14. Method according to one of the preceding Claims 10 to 13, in which non-real-time-critical data of the second area are transferred into the fourth area.

15. Method according to one of the preceding Claims 10 to 14, in which a cycle synchronization message is sent out from a master clock for synchronizing local relative clocks of first users of the first data network and the cycle synchronization messages are transmitted as real-time-critical data of the first area of the first transmission cycle into the third area of the second transmission cycle and into the second network for synchronizing local relative clocks of second users of the second data network.

16. Method according to one of the preceding Claims 10 to 15, in which local relative clocks of second users of the second data network are synchronized via cycle synchronization messages of a second master clock of the second data network.

17. Method according to one of the preceding Claims 10 to 16, in which software calls of first users are transmitted as non-real-time-critical data from the second area of the first transmission cycle into the fourth area of the second transmission cycle to second users of the second data network.

18. Computer program product containing means for executing a method according to one of the preceding Claims 10 to 17, when the computer program is executed on a system for transmitting data messages.

## Revendications

1. Système pour la transmission de télégrammes de données ayant un premier réseau de données (1) comportant des premiers moyens pour la transmission de télégrammes de données dans au moins un premier cycle de transmission, le premier cycle de transmission étant divisé en une première plage (4) pour la transmission de données critiques en temps réel et en une deuxième plage (5) pour la transmission de données non critiques en temps réel, et ayant un deuxième réseau de données (2) comportant des deuxièmes moyens pour la transmission de télégrammes de données dans au moins un deuxième cycle de transmission, le deuxième cycle de transmission étant divisé en une troisième plage (7) pour la transmission de données critiques en temps réel et en une quatrième plage (8) pour la transmission de données non critiques en temps réel, et ayant une unité de connexion (13) pour la transmission de données critiques en temps réel de la première plage dans la troisième plage.

2. Système selon la revendication 1, dans lequel le premier et/ou le deuxième réseau de données est un Ethernet, un Ethernet en temps réel isochrone, un réseau de données PROFIBUS, un réseau de données SERCOS ou un réseau de données FIREWIRE qui est utilisé notamment pour la mise en réseau et/ou la commande d'installations industrielles.

3. Système selon la revendication 1 ou 2, dans lequel les premiers et/ou deuxièmes cycles de transmission ont une durée réglable et/ou variable et dans lequel la durée respective varie de préférence de manière périodique.

4. Système selon la revendication 1, 2 ou 3, dans lequel l'unité de connexion identifie un deuxième cycle de transmission qui suit chronologiquement le premier cycle de transmission et dans lequel les données critiques en temps réel de la première plage du premier cycle de transmission sont associées à la troisième plage du deuxième cycle de transmission.

5. Système selon l'une des revendications précédentes 1 à 4, dans lequel l'unité de connexion est conçue pour la transmission de données non critiques en temps réel de la deuxième plage dans la quatrième plage.

6. Système selon l'une des revendications précédentes 1 à 5, dans lequel l'unité de connexion identifie un deuxième cycle de transmission qui suit chronologiquement le premier cycle de transmission et dans lequel elle transmet les données non critiques en temps réel de la deuxième plage dans la quatrième plage.

7. Système selon l'une des revendications précédentes 1 à 6, avec un premier générateur d'horloge (10) du premier réseau de données pour l'émission de télégrammes de synchronisation de cycle en vue de la synchronisation d'horloges relatives locales d'utilisateurs du premier réseau de données, l'unité de connexion étant conçue pour la transmission des télégrammes de synchronisation de cycle critiques en temps réel de la première plage d'un cycle de transmission dans la troisième plage du deuxième cycle de transmission.

8. Système selon l'une des revendications précédentes 1 à 7, avec un deuxième générateur d'horloge (12) pour le deuxième réseau de données pour la transmission de télégrammes de synchronisation de cycle en vue de la synchronisation d'horloges relatives locales des utilisateurs du deuxième réseau de données.

9. Système selon l'une des revendications précédentes 1 à 8, dans lequel l'unité de connexion est conçue pour la transmission d'appels de logiciels, notamment de Remote Procédure Calls.

10. Procédé pour la transmission de télégrammes de données d'un premier utilisateur d'un premier réseau de données comportant des premiers moyens pour la transmission de télégrammes de données dans au moins un premier cycle de transmission, le premier cycle de transmission étant divisé en une première plage pour la transmission de données critiques en temps réel et en une deuxième plage pour la transmission de données non critiques en temps réel, à un deuxième utilisateur d'un deuxième réseau de données comportant des deuxièmes moyens pour la transmission de télégrammes de données dans au moins un deuxième cycle de transmission, le deuxième cycle de transmission étant divisé en une troisième plage pour la transmission de données critiques en temps réel et en une quatrième plage pour la transmission de données non critiques en temps réel, des données critiques en temps réel de la première plage du premier cycle de transmission étant transmises au deuxième utilisateur dans la troisième plage d'un deuxième cycle de transmission qui suit le premier cycle de transmission.

11. Procédé selon la revendication 10, dans lequel on utilise comme premier et/ou deuxième réseau de données un Ethernet, un Ethernet en temps réel isochrone, un réseau de données PROFIBUS, un réseau de données SERCOS ou un réseau de données FIREWIRE.

12. Procédé selon la revendication 10 ou 11, dans lequel les premiers et/ou deuxièmes cycles de transmission varient, de préférence de manière périodique.

13. Procédé selon la revendication 10, 11 ou 12, dans lequel on détermine pour la transmission de données le deuxième cycle de transmission suivant qui suit chronologiquement le premier cycle de transmission.

14. Procédé selon l'une des revendications précédentes 10 à 13, dans lequel on transmet des données non critiques en temps réel de la deuxième plage dans la quatrième plage.

15. Procédé selon l'une des revendications précédentes 10 à 14, dans lequel un télégramme de synchronisation de cycle est envoyé par un générateur d'horloge pour la synchronisation d'horloges relatives locales de premiers utilisateurs du premier réseau de données et dans lequel on transmet les télégrammes de synchronisation de cycle comme données critiques en temps réel de la première plage du cycle de transmission dans la troisième plage du deuxième cycle de transmission dans le deuxième réseau pour la synchronisation d'horloges relatives locales de deuxièmes utilisateurs du deuxième réseau de données.

16. Procédé selon l'une des revendications précédentes 10 à 15, dans lequel la synchronisation d'horloges relatives locales de deuxièmes utilisateurs du deuxième réseau de données s'effectue par l'intermédiaire de télégrammes de synchronisation de cycle d'un deuxième générateur d'horloge du deuxième réseau de données.

17. Procédé selon l'une des revendications précédentes 10 à 16, dans lequel on transmet des appels de logiciels de premiers utilisateurs comme données non critiques en temps réel de la deuxième plage du premier cycle de transmission dans la quatrième plage du deuxième cycle de transmission à des deuxièmes utilisateurs du deuxième réseau de données.

18. Programme informatique comportant des moyens pour la réalisation d'un procédé selon l'une des revendications précédentes 10 à 17 lorsque le programme informatique est exécuté sur un système pour la transmission de télégrammes de données.
